(19) Europäisches Patentamt / European Patent Office / Office européen des brevets

(11) **EP 3 819 530 B1**

(12) **EUROPEAN PATENT SPECIFICATION**

(45) Date of publication and mention of the grant of the patent:
**07.06.2023  Bulletin 2023/23**

(21) Application number: **19207644.6**

(22) Date of filing: **07.11.2019**

(51) International Patent Classification (IPC):
*F16L 53/38* $^{(2018.01)}$     *F16L 59/14* $^{(2006.01)}$
*H05B 3/56* $^{(2006.01)}$     *H02G 3/30* $^{(2006.01)}$
*H02G 15/105* $^{(2006.01)}$

(52) Cooperative Patent Classification (CPC):
**F16L 53/38; F16L 59/143; H05B 3/56;** H02G 3/24;
H02G 15/1055

(54) **PIPELINE ELECTRIC HEATING SYSTEM**

ELEKTRISCHES ROHRLEITUNGSHEIZSYSTEM

SYSTÈME DE CHAUFFAGE ÉLECTRIQUE DE PIPELINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.05.2021  Bulletin 2021/19**

(73) Proprietor: **GammaSwiss SA**
**1400 Yverdon-les-Bains (CH)**

(72) Inventor: **Strupinskiy, Michael**
**1134 Budapest 13 (HU)**

(74) Representative: **reuteler & cie SA**
**Chemin de la Vuarpillière 29**
**1260 Nyon (CH)**

(56) References cited:
**EP-A1- 0 071 435       CN-A- 108 980 504**
**CN-U- 202 469 349**

**Description**

**Field of the Invention**

The present invention relates to electric heating systems used for transport pipelines in the oil and gas industry.

**Background of the Invention**

Today, heating of the transport pipelines at a long distance (more than 10 km) requires the construction of an appropriate power supply system, and power stations should be located approximately every 1-10 kilometers depending on the electric heating system.

Accompanying power supply network makes the electric heating system more complicated and less cost-effective. In addition, there is no opportunity to heat the pipes where an accompanying network cannot be constructed, for example, at the sea floor.

An electric heating system with skin-effect is the most cost-effective heating system at a distance of 25 km. The heating device in these systems is a ferromagnetic pipeline called a heating pipe with an insulated conductor inside it. At one end, the heating pipe and the insulated conductor are interconnected and the other end, they are connected via an alternating current (AC) power supply source. Applied AC voltage generates current in the conductor, whereby the current returns along an inner surface of the pipe. The reverse current is accumulated on the inner surface of the pipe due to magnetic fields induced by the currents in the insulated conductor and in the ferromagnetic pipeline. This current flows in the pipe at a distance called skin depth (M.L. Strupinskiy, Analysis of the self-adjusted cable properties at low temperatures / Analytical scientific technical journal // M.L. Strupinskiy, N.N. Khrenkov, 2011: Industrial electric heating: Hager: 2011. - P. 6-11).

The above described phenomenon eliminates the measurable voltage on the outer surface of the pipe, which earths the pipeline. While the electric current is accumulated on the inner surface of the heating pipe, the generated heat will be disseminated through the pipe, thus increasing the temperature of the pipe surface and its contents to the required level.

A heating cable based on the skin-effect with a central conductor, inner insulated layer and a ferromagnetic external conductor placed coaxially around is disclosed in RU 2589553 C1. The inner insulated layer is made from polymer, while the external conductor is made from a goffered steel pipe with walls thinner than three skin-layer thicknesses at the operating supply voltage frequency.

An electric heating system with heating cables with a three-phase power supply system is disclosed in RU 127273 U1. The heating cable contains current-carrying wires insulated by a thermal resistant coating. At one end, the wires are free to be connected to a power supply source, while at the other end they are interconnected into a complete electric circuit.

Disadvantage of known systems and resistive cables include an insufficient distance of the electric heating with one power supply source, the distance being limited to 25 km, low heat generation, and inefficient use of the heat generated for heating the product in the transport pipeline.

CN 108980504 A1 discloses a long-distance pipeline electric heat tracing system comprising a heating cable and a control panel, the heating cable being connected with the control panel to form a heating circuit, and the control panel controlling the power supply of the heating circuit, the heating cable being a single core series-type constant-power heating cable comprising a conductor, an insulating layer and a protective layer arranged in order from the inside to the outside; the conductor made of an aluminum-magnesium-silicon alloy material.

**Summary of the Invention**

An object of the present invention is to provide a pipeline electric heating system which can generate a specified amount of heat at a distance greater than 25km, for instance up to 200 km, with no accompanying network and with one power supply source.

Advantages of the invention include an increase of the heat generation efficiency and the usage of the specified amount of heat for heating the product in the transport pipe at a significant distance (e.g. up to 200 km), improved constructability of the system, maintenance convenience, as well as simplification of the electric heating system.

Objects of the invention are achieved by providing the pipeline electric heating system according to claim 1. Dependent claims recite various advantageous features of embodiments of the invention.

Disclosed herein is a pipeline electric heating system for a transport pipeline comprising a pipe and thermal insulation therearound, the system comprising a power supply transformer, a feed terminal, an end terminal, one or more service terminals positioned between the feed and end terminals, a parameter control and monitoring system, and a heating cable arrangement. The heating cable arrangement includes three heating resistive cables connected to three phases of a three-phase power electrical supply extending along the pipe from the feed terminal to the end terminal passing through the one or more service terminals. Each resistive cable is mounted individually within a corresponding cable guide. The cable guides and associated resistive cables mounted therein are mounted on an outer surface of the pipe and below the thermal insulation. Each resistive cable comprises an inner conductor and a shield surrounding the inner conductor, wherein the shields of each resistive cable are connected to ground and are interconnected together at the end terminal and/or at the feed terminal, and wherein the shields or inner conductors are transposed such that the shields or inner conductors of the three phases are transposed at said at least one service terminal.

In an advantageous embodiment, adjacent cable guides are separated by a non-nul distance. In an advantageous embodiment, the system comprises at least two service terminals.

In an advantageous embodiment, each phase comprises a one-wire resistive medium-voltage cable with shield and insulation.

In an advantageous embodiment, the cable guide for each resistive cable has a substantially square, trapezoidal, or rounded cross section.

In an advantageous embodiment, each cable guide is sealed along longitudinal edges to the outer surface of the pipe.

In an advantageous embodiment, the non-nul distance (L) between adjacent cable guides is substantially constant.

In an advantageous embodiment, the cable guides and associated resistive cables placed inside are mounted on an upper part of the pipe.

In an advantageous embodiment, cable guides are made from polymer or aluminum.

In an advantageous embodiment, resistive cables are star connected together at the end terminal.

In an advantageous embodiment, wires of the resistive cables have a flat shaped cross-sectional profile.

In an advantageous embodiment, the parameter control and monitoring system comprises temperature, current and load voltage sensors.

In an advantageous embodiment, the parameter control and monitoring system is configured for remote measurement and control of the heating system, including measurement of ambient temperature, detecting integrity of the resistive cables, and control of load current and voltage in each resistive cable.

Further objects and advantageous features of the invention shall be apparent from the following detailed description of embodiments of the invention and accompanying figures.

## Brief description of the figures

Figure 1 illustrates schematically a pipeline installation comprising an electric heating system according to an embodiment of the invention;

Figure 2 illustrates schematically a section of pipeline comprising an electric heating system according to an embodiment of the invention;

Figure 3 illustrates a resistive cable for an electric heating system according to an embodiment of the invention;

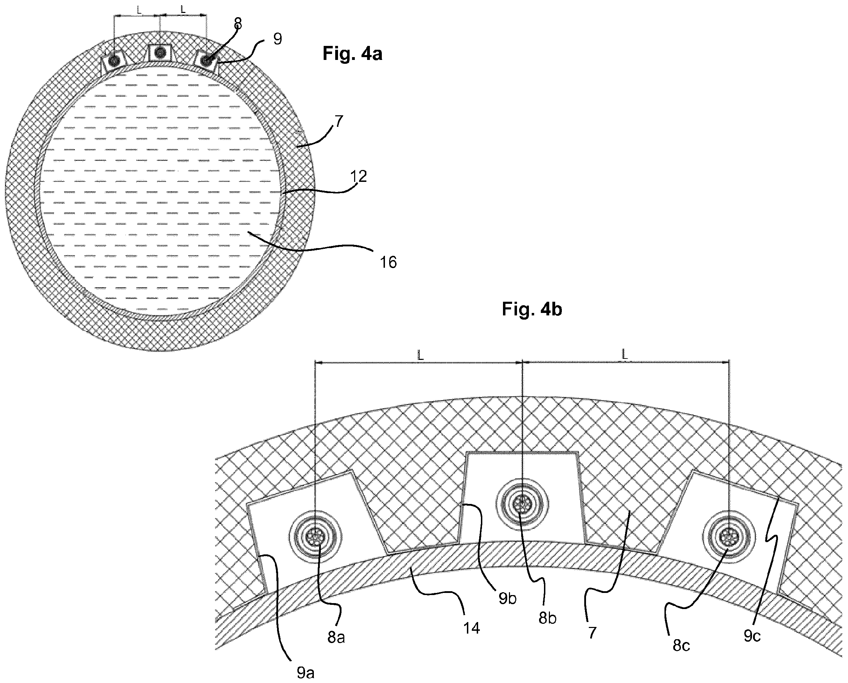

Figure 4a illustrates schematically a cross-section of a pipeline with an electric heating system according to an embodiment of the invention;

Figure 4b is a detail view of a portion of figure 4a;

Figure 5 is detail view similar to figure 4b, but of another embodiment;

Figure 6 is a schematic representation of an electric heating system according to an embodiment of the invention illustrating a shield transposition.

## Detailed description of embodiments of the invention

A pipeline electric heating system according to embodiments of the invention may be implemented to heat pipelines located on supporting piers above the ground, underground pipelines, and submerged underwater pipelines.

A pipeline electric heating system according to embodiments of the invention advantageously provides a special combination, composition and location of its elements for heating pipelines over a distance of around 150-200 km, which is relevant today for the oil and gas product transportation facilities.

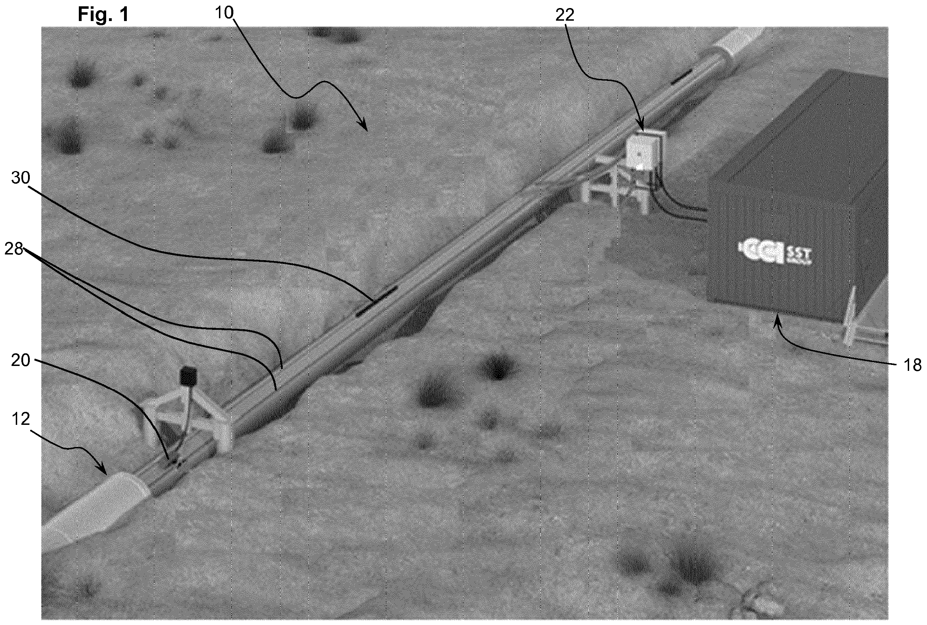

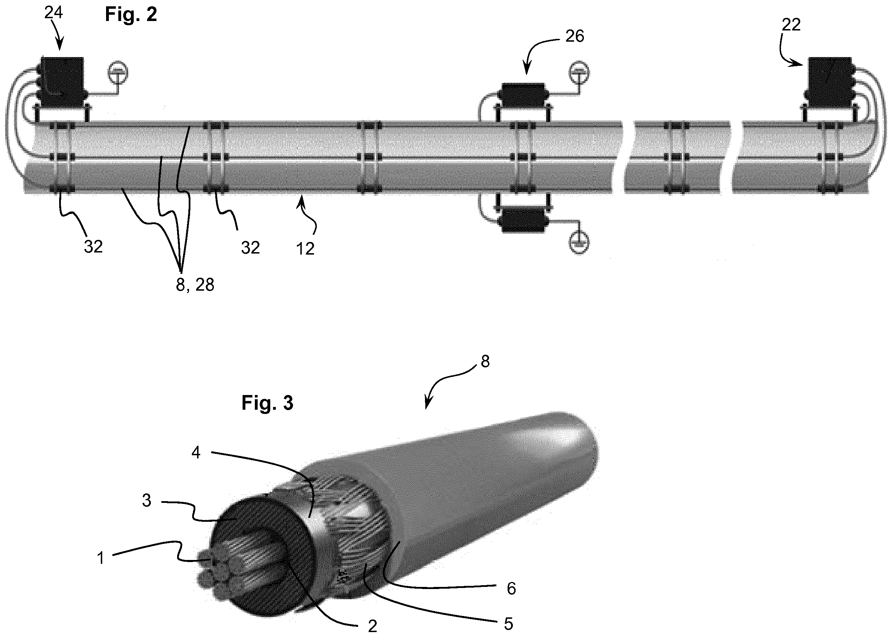

As best seen in figures 1 and 2, a pipeline installation 10 comprising an oil or gas transport pipe 12 and a pipeline electric heating system according to embodiments of the invention, may advantageously comprise the following elements that are important for low maintenance functioning: a power supply transformer 18, a feed terminal 22, an end terminal 24, and at least one intermediate service terminal 26. The pipeline electric heating system 20 according to embodiments of the invention includes a heating cable arrangement 28 comprising a plurality of heating resistive cables 8, connecting and end sleeves 30, a line parameter control and monitoring system (not shown) including at least one temperature sensor 20 mounted on the transport pipe 12, as well as fastening elements 32 for placing the resistive cables 8 of the heating cable arrangement 28 on the transport pipe 12.

Power for a system according to embodiments of the invention is supplied from a special power supply transformer 18 comprising a switch key with a wide adjustment range for the secondary voltage. Electric heating power needs may require the transformer to comprise air barrier insulation, cast insulation, or oil insulation.

The heating cable arrangement 28 may advantageously comprise three resistive cables 8a, 8b, 8c that may advantageously carry three corresponding phases of a three-phase power supply system. Each resistive cable 8a, 8b, 8c is preferably mounted inside a corresponding cable guide 9a, 9b, 9c mounted on the surface of the structural pipe 14 (typically made of steel or another metal) of the transport pipeline. Each of the three resistive cables 8 is thus located inside a separate cable guide 9 mounted directly on the outer side of the structural metal pipe 14 and surrounded by a thermal insulation 7 of the transport pipeline 12. For pre-insulated pipelines, the resistive cables 8 may be installed inside the cable guides 9 at the site of manufacturing of the transport pipeline. The cable guides 9 contribute to the effectiveness of transfer of heat generated by the resistive cables to pass into the structural metal pipe and into the oil or gas 16 flowing inside the pipe.

The phases of a three-phase power supply system installed separately and each surrounded by thermal insulation 7, allows one to place cables 8 of large cross section in a very compact area, which increases a phase-to-earth voltage at each phase and thus increases the pipeline heating length. The cross-section could be further increased by the cables 8 with flat or flattened wires.

The plurality of resistive cables 8a, 8b, 8c are preferably star connected together at the end terminal 24.

Advantageously, separate location of the plurality of phases in individual cable guides transfers the generated heat to the pipe 12 and fluid contained therein more efficiently by reducing the transfer of heat between cables 8, which also contributes into the increase of the phase-to-earth voltage, and thus, the increase of the pipeline heating length.

The cable guides 9 guarantee the separation of the plurality of phases and are configured to avoid having the thermal insulation 7 contact the resistive cables 8 or to be inserted between the resistive cables and the structural pipe 12. The cable guides 12 mounted directly on the surface of the structural pipe 12 allow one to place the heating cables 8a, 8b, 8c efficiently and with the least damages during system installation.

In an embodiment, the cable guides 9a, 9b, 9c for each resistive cable 8a, 8b, 8c may advantageously comprise a longitudinal box of substantially square, trapezoidal, or rounded (e.g. U shaped) cross-section. The cable guide 9 for a plurality of resistive cables could be made of a single element with interconnected cable guide portions 9a, 9b, 9c, or could be made of a plurality of separate guides mounted independently on the pipe.

The cable guides 9a, 9b, 9c , with resistive cables 8a, 8b, 8c inside, may be space apart at a substantially equal distances $L$ on the pipe 12 which contributes into better distribution and application of the generated heat. The cable guide 9, with the resistive cables 8 inside, is preferably mounted on a top part of the pipeline, which is the most efficient in terms of thermodynamics to transfer the generated heat to the pipeline transported product, taking into account that the ground in which the pipeline is buried is typically colder closer to the ground surface during cold periods.

The cable guide 9 could be made from polymer or aluminum or other material with similar physical properties. The choice of the material for the cable guide 9 is also determined by the required transfer of heat from the heating phases 8a, 8b, 8c to the pipe 12 and to the transported oil or gas 16.

Linear lengths of the resistive cables 8 may be interconnected by high voltage connecting sleeves 30 configured for the same voltage as the cable phases. Also, the ends of the resistive cables are designed to have terminal sleeves (not shown).

For regular maintenance, control of line parameters including insulating resistance of the heating cable 8 as well as the search for the defects, may be effected with the aid of service, end and feed terminals 26, 24, 22 aimed to increase the adaptability of the electric heating system as well as maintenance convenience.

The pipeline electrical heating system according to the invention substantially reduces the need for many feeding transformer substations and accompanying electric network along a distance of 150-200 km.

The resistive cable 8 according to advantageous embodiments of the inventions comprises a medium-voltage one-wire phase cable. The cable 8 is chosen so that the generated heat matches the required heat for the pipeline with regard to the losses in the protective shields, for example, 10 or 18 W/m. Figure 3 illustrates elements of a resistive cable 8 according to embodiments of the invention, comprising a current carrying wire 1 of aluminum or copper, a layer of a semiconducting material 2 for instance of a combined sheathed cable type (CSC), an insulation layer 3 for instance of cross-linked polyethylene, a semiconducting material 4 for instance of CSC type, a shield 6 for instance made of braided copper wires, and an outer coating 6 for instance made from a thermoplastic elastomer.

Directing the current in the metal cable shield 6 is a distinctive feature of the separately located phases 8a, 8b, 8c. The shields 6 of each resistive cable 8 have intermediate and end earth connections and also interconnected at the ends of the pipeline.

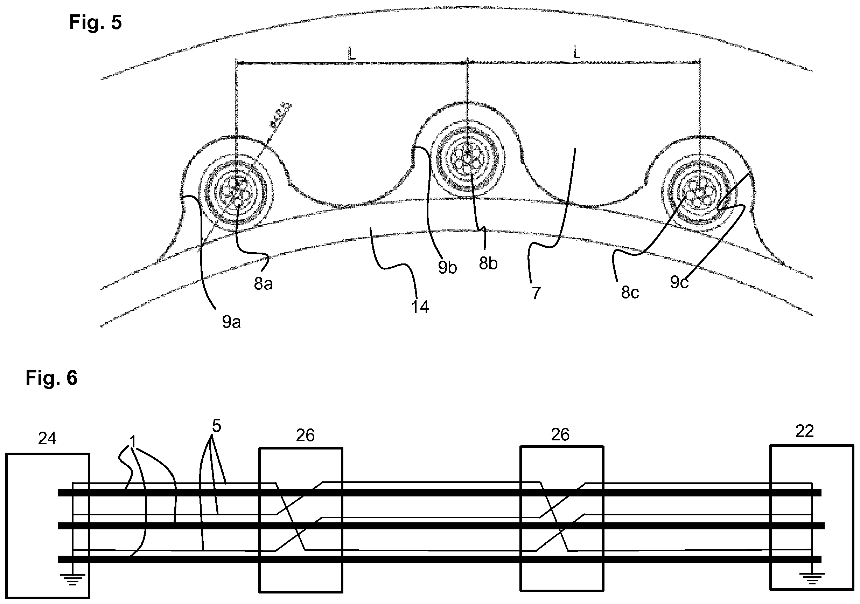

The shields of the three phases are transposed along the length of the cables at intermediate positions that are situated in service terminals 26, as schematically illustrated in figure 6. For instance, if there are two service terminals 26 located between the feed terminal 22 and end terminal 24 of the cables, cable shielding may be transposed twice so that each shield runs along all three phases over sections thereof. Shield transposition is per se known for Medium-voltage (MV) and high-voltage (HV) underground power cables to reduce power losses by cancelling the direction of induced currents in the shields. It may be noted that transposition is relative and either the shields of the three phase cables are transposed, or the wires of the cables are transposed.

In the present invention, shield transposition reduces losses in the cable shields 6 for better heat distribution over a longer cable length of the pipeline electric heating system. Heat generation in some system elements due to the transposition connections does not affect good operation of the system but should be taken into account in estimates and design of the electric heating system.

Transposition advantageously enables to adjust the heat generation position (wire or shield) and the generated heat value. A lack of transposition significantly increases the losses in the shield 6, which results in shortening the maximum length of the heated area. What is more, a lack of transposition increases the currents in the shields 5 at significant lengths, which reduces safety and increases potential for damage as well as reducing the useful lifetime of the cables.

The resistive cables 8 could be multi-wired.

Table 1 below indicates examples of advantageous specifications for heating cables according to embodiments of the electric heating system according to the invention.

*Table 1*

| Technical parameters | Values |
|---|---|
| Cross-section of a current-carrying wire | Copper:10...40 mm$^2$ <br> Aluminum: 25...70 mm$^2$ |
| Diameter by an outer coating of a cable | min 8.5 mm; max 27 mm |
| Max. operating temperature | 100 °C |
| Max. voltage | Up to 7.5 kV |
| Ambient temperature | -60...+55 °C |
| Ex-marking for explosive gas atmospheres | Ex 60079-30-1 IIC T5 Gb |
| Ex-marking for explosive dust atmospheres | Ex 60079-30-1 IIIC T100°C Db |

A control and monitoring system for the parameters of electric heating system ensures energy efficiency and safe operation of the system. The control and monitoring system includes temperature, current, and load voltage sensors. With management algorithms, the system controls parameters of the heating system remotely based on measured temperatures for instance of the oil, the ambient temperature, the resistive cables, and transport pipeline. The control system controls electric parameters, including the load currents in each phase, voltage and circuit integrity.

The control and monitoring system may use programmable logic controllers (PLC), discrete and analog signal I/O modules, operator panels and serial interface modules. The control and monitoring system for the circuit parameters transfers object condition parameters to a High Level Control System using any *per se* well known industrial data protocols (e.g. ModBus RTU, Ethernet, CAN, HART, PROFIBUS).

Short-circuit currents require direct separate current measurement in the phases 8a, 8b, 8c and an analysis of the line condition. The same mechanism may be used for localizing a damage area and for accelerating repair works.

The control and monitoring system for the circuit parameters is configured to maintain operation with one and two phases instead of three phases in some cases, since some working capacity of electric heating should be maintained, which is critical for the heated pipeline. The control and monitoring system for the parameters is also configured to adjust the generated heat by safe switching on and off and by changing the supplied voltage (transformer winding changeover).

A system according to embodiments of the invention may function as follows:

The required linear voltage is supplied from the power source via a feeding transformer to a feeding terminal distributing the voltage into three phases (phase voltage). The power is supplied from one feeding substation. The claimed electric heating system maintains the claimed electric parameters in the heated circuit at the distance of up to 100 km. Thus, if a feeding substation is located in the middle of the heated pipeline area, then one substation could heat the pipeline at the distance of up to 100 km in one direction and at the distance of 100 km in the other direction. So, one feeding substation could heat the pipeline at the distance of up to 200 km in total. The parameter control and monitoring system completely controls and manages the system according to embodiments of the invention remotely.

Each phase comprises a resistive cable 8 generating heat to the cable guide 9 and the transport pipeline. Separately placed heating phases 8a, 8b, 8c increases straight phase voltage in each phase in a well specified area of thermal insulation 7. Higher straight phase voltage increases the heating arm length. Flat or flattened cable wires increases the cross section of the heating phases in a given limited space of thermal insulation 7. What is more, separation of heating phases 8a, 8b, 8c prevents the phases from overheating, which also contributes into the higher straight phase voltage.

An example of calculation and application of a pipeline electric heating system according to embodiments of the invention is described below.

The parameters of the electric heating system of the pipeline are calculated as an example with 70 mm$^2$ aluminium wires.

A commercially available software (Elcut Professional app) was used to calculate the heat losses and temperature parameters. Convective heat exchange conditions were chosen to be the boundary conditions on the earth surface to calculate the heat losses: $\alpha$=30 V/(m$^2$*K), T$_{amb}$=18 °C. The soil temperature at 10 m depth was chosen to be +21 °C. The product temperature at the inner pipeline wall was chosen to be +50 °C.

The cable parameters were as follows:

- Wire: aluminum, 70 mm$^2$ (AC-70)
- Heat capacity: 30 V/m
- Number of wires: 3
- Heat arm length: 100 km
- Supply voltage (linear): 8899 W
- Supply voltage (phase): 5138 V
- Heat loss value with a depreciation factor 1.07 is 25.3 W/m.
- It is supposed that three heating wires will be placed in the aluminum cable guide with the size of 55x40 mm and wall thickness of 2.5 mm (GOST 18475).

Temperature parameters of the system in pass and shutdown modes are given in Table 2 below:

*Table 2*

| Mode | Wire temperature (°C) | Product temperature (°C) |
|---|---|---|
| **Cable is tightly attached to the guiding element** | | |
| Pass mode | 64 | 50 |
| Shutdown mode at Tamb=+18 °C | 76 | 60 |
| Shutdown mode at Tamb =+35 °C | 90.5 | 75 |
| **5 mm clearance between the cable and the guiding element** | | |
| Pass mode | 79 | 50 |
| Shutdown mode at Tamb=+18 °C | 91 | 60 |
| Shutdown mode at Tamb =+35 °C | 105 | 75 |

The calculations of the electric parameters of the system with a wire AC-70/11.

Input data:

- Three heating wires;
- Required heating capacity of one wire: 10 W/m;
- Heat arm length: L=100 km;
- Current carrying wire: AC-70/11 as per GOST 839-80;
- Current carrying wire material: aluminum;

- Electric resistance of 1 km cable to the direct current at 20 °C: 0.4218 Om;
- Calculation of the linear capacity of the cable at wire temperature 64 °C
- Temperature resistance coefficient: $\alpha = 4.3 \cdot 10^{-3}$ 1/°C.
- Resistance of 100 km long area at wire temperature 64 °C:

$$R_{64} = R_{20} \cdot (1 + \alpha \cdot \Delta T) = 25.308 \cdot (1 + 4.3 \cdot 10^{-3} \cdot 44) = 30.096 \ Om$$

Full heating capacity at wire temperature 64 °C:

$$P_{64} = \frac{U^2}{R_{64}} = \frac{U^2}{30.096} = 1000000 \ Bm$$

Here we get the value of the feeding voltage to the phase
U=5485 V.
Linear capacity of one heating wire at wire temperature
64 °C:

$$p_{64} = \frac{P_{64}}{L} = \frac{1000000}{100000} = 10 \ Bm \ / \ \text{м}$$

Calculations of the resistive cable are given in Table 3 below:

***Table 3***

| Wire | Roboheat, W/m | Number of wires | P per wire, W/m | Arm length, m | Ul, V | Uph, V | U fall per phase, V/m | Iph, A |
|---|---|---|---|---|---|---|---|---|
| Copper, 35 mm$^2$ | 30 | 3 | 10 | 30000 | 4 010 | 2 315 | 0.077 | 179.8 |
| Copper, 20mm$^2$ | 30 | 3 | 10 | 30000 | 5 300 | 3060 | 0.102 | 109.2 |
| Al, 35 mm$^2$ (AC-35) | 30 | 3 | 10 | 30000 | 5070 | 2 927 | 0.098 | 118.6 |
| Copper, 16 mm$^2$ | 30 | 3 | 10 | 30000 | 5 926 | 3 421 | 0.114 | 88.7 |
| Copper, 10 mm$^2$ | 30 | 3 | 10 | 30000 | 7 496 | 4 328 | 0.144 | 56.6 |
| Copper, 40 mm$^2$ | 30 | 3 | 10 | 60000 | 7 335 | 4 235 | 0.071 | 141.7 |
| Al, 70 mm$^2$ (AC-70) | 30 | 3 | 10 | 100 000 | 8899 | 5138 | 0.063 | 143.2 |

Special placement and greater straight cross section of the heating phases increase the length of the heated area of the pipeline up to 200 km with no change in the amount and value of the thermal insulation 7 of the heated pipeline, as well as distribute the heat along the pipeline, which contributes into the efficiency and the usage of the specified amount of heat for the transport heating of the product in the transport pipe at the distance of up to 200 km.
The cable guide 9 mounted directly on the pipe distribute the generated heat by the heating phases in a more efficient manner.
Thus, this provides pipeline electric heating system able to generate the specified amount of heat at a significant distance of up to 200 km with no accompanying network and with one feeding point (one substation).
On the whole, a lack of the accompanying feeding network simplifies the claimed electric heating system.

*List of features*

pipeline installation 10

**transport pipeline 12**

structural (metal) pipe 14
thermal insulation 7

oil, gas 16
power supply transformer 18
**pipeline electric heating system**

feed terminal 22
end terminal 24
service terminal 26
**heating cable arrangement 28**
resistive cable 8

current carrying conductor 1
aluminum or copper wires
semiconducting material layer 2 combined sheathed cable type (CSC)
insulation layer 3
cross-linked polyethylene layer
semiconducting material layer 4
CSC type
electrical shield 5
copper wire shield
outer insulating layer 6
thermoplastic elastomer coating

connecting and end sleeves 30
temperature sensor 20
**cable guide 9**
fastening elements 32

*distance between cables L on the pipe*

**Claims**

1. A pipeline electric heating system for a transport pipeline (12) comprising a pipe (14) and thermal insulation (7) therearound, the system comprising a power supply transformer (18), a feed terminal (22), an end terminal (24), one or more service terminals (26) positioned between the feed and end terminals, a parameter control and monitoring system, and a heating cable arrangement (28) including three heating resistive cables (8) connected to three phases (8a, 8b, 8c) of a three-phase power electrical supply extending along the pipe from the feed terminal (22) to the end terminal (24) passing through the one or more service terminals (26), each said resistive cable being mounted individually within a corresponding cable guide (9a, 9b, 9c), the cable guides and associated resistive cables mounted therein being adapted for being mounted on an outer surface of the pipe and below the thermal insulation (7), and each resistive cable comprises an inner conductor and a shield surrounding the inner conductor, **characterized in that** the shields of each resistive cable are connected to ground and are interconnected together at the end terminal and/or at the feed terminal, and **in that** the shields or inner conductors are transposed such that the shields or inner conductors of the three phases are transposed at said at least one service terminal

2. The system according to the preceding claim wherein the adjacent cable guides are separated by a non-nul distance (L).

3. The system according to any preceding claim wherein the system comprises at least two service terminals (26).

4. The system according to any preceding claim wherein each phase comprises a one-wire resistive medium-voltage cable with shield (5) and insulation (3).

5. The system according to any preceding claim, wherein the cable guide for each resistive cable has a substantially square, trapezoidal, or rounded cross section.

6. The system according to the preceding claim, wherein each cable guide is sealed along longitudinal edges to the outer surface of the pipe (12).

7. The system according to any preceding claim, wherein the non-nul distance (L) between adjacent cable guides is substantially constant.

8. The system according to any preceding claim, wherein the cable guides and associated resistive cables placed inside are adapted for being mounted on an upper part of the pipe.

9. The system according to any preceding claim, wherein the cable guides are made from polymer or aluminum.

10. The system according to any preceding claim, wherein resistive cables are star connected together at the end terminal.

11. The system according to any preceding claim, wherein wires of the resistive cables have a flat shaped cross-sectional profile.

12. The system according to the preceding claim, wherein the parameter control and monitoring system comprises temperature, current and load voltage sensors.

13. The system according to the preceding claim, wherein the parameter control and monitoring system is configured for remote measurement and control of the heating system, including measurement of ambient temperature, detecting integrity of the resistive cables, and control of load current and voltage in each resistive cable.


**Patentansprüche**

1. Elektrisches Rohrleitungsheizsystem für eine Transportrohrleitung (12), die ein Rohr (14) und eine thermische Isolierung (7) darum herum umfasst, wobei das System einen Leistungsversorgungstransformator (18), einen Einspeiseanschluss (22), einen Endanschluss (24), einen oder mehrere Dienstanschlüsse (26), die zwischen dem Einspeiseanschluss und dem Endanschluss positioniert ist bzw. sind, ein Parametersteuerungs- und Überwachungssystem und eine Heizkabelanordnung (28) umfasst, diese drei Widerstandsheizkabel (8) umfasst, die mit drei Phasen (8a, 8b, 8c) einer dreiphasigen elektrischen Leistungsversorgung verbunden sind, die sich entlang des Rohrs von dem Einspeiseanschluss (22) zu dem Endanschluss (24) erstreckt und dabei durch den einen oder die mehreren Dienstanschlüsse (26) verläuft, wobei jedes Widerstandskabel einzeln mit einer entsprechenden Kabelführung (9a, 9b, 9c) montiert ist, wobei die Kabelführungen und zugehörigen Widerstandskabel, die darin montiert sind, angepasst sind, um auf einer äußeren Oberfläche des Rohrs und unter der thermischen Isolierung (7) montiert zu sein, und jedes Widerstandskabel einen inneren Leiter und eine Abschirmung umfasst, die den inneren Leiter umgibt, **dadurch gekennzeichnet, dass** die Abschirmungen von jedem Widerstandskabel mit der Erde verbunden sind und am Endanschluss und/oder am Einspeiseanschluss miteinander verbunden sind, und dadurch, dass die Abschirmungen oder inneren Leiter derart verdrillt sind, dass die Abschirmungen oder inneren Leiter der drei Phasen an dem mindestens einen Dienstanschluss verdrillt sind.

2. System nach dem vorhergehenden Anspruch, wobei die benachbarten Kabelführungen durch einen Abstand von ungleich null (L) getrennt sind.

3. System nach einem der vorhergehenden Ansprüche, wobei das System mindestens zwei Dienstanschlüsse (26) umfasst.

4. System nach einem der vorhergehenden Ansprüche, wobei jede Phase ein eindrahtiges Mittelspannungswiderstandskabel mit Abschirmung (5) und Isolierung (3) umfasst.

5. System nach einem der vorhergehenden Ansprüche, wobei die Kabelführung für jedes Widerstandskabel einen im Wesentlichen quadratischen, trapezförmigen oder abgerundeten Querschnitt aufweist.

6. System nach dem vorhergehenden Anspruch, wobei jede Kabelführung entlang von Längsrändern an der äußeren Oberfläche des Rohrs (12) abgedichtet ist.

7. System nach einem der vorhergehenden Ansprüche, wobei der Abstand von ungleich null (L) zwischen benachbarten Kabelführungen im Wesentlichen konstant ist.

8. System nach einem der vorhergehenden Ansprüche, wobei die Kabelführungen und zugehörigen darin platzierten Widerstandskabel angepasst sind, um an einem oberen Teil des Rohrs montiert zu werden.

9. System nach einem der vorhergehenden Ansprüche, wobei die Kabelführungen aus Polymer oder Aluminium bestehen.

10. System nach einem der vorhergehenden Ansprüche, wobei Widerstandskabel an dem Endanschluss zusammen sterngeschaltet sind.

11. System nach einem der vorhergehenden Ansprüche, wobei Drähte der Widerstandskabel ein Querschnittsprofil mit flacher Form aufweisen.

12. System nach dem vorhergehenden Anspruch, wobei das Parametersteuerungs- und Überwachungssystem Temperatur-, Strom- und Lastspannungssensoren umfasst.

13. System nach dem vorhergehenden Anspruch, wobei das Parametersteuerungs- und Überwachungssystem zur Fernmessung und -steuerung des Heizsystems ausgestaltet ist, die das Messen der Umgebungstemperatur, das Feststellen der Unversehrtheit der Widerstandskabel und die Steuerung von Laststrom und Spannung in jedem Widerstandskabel umfassen.

## Revendications

1. Système de chauffage électrique de pipeline pour un pipeline de transport (12) comprenant une conduite (14) et une isolation thermique (7) autour de celle-ci, le système comprenant un transformateur d'alimentation de puissance (18), une borne d'entrée (22), une borne de sortie (24), une ou plusieurs bornes de service (26) positionnées entre les bornes d'entrée et de sortie, un système de commande et de surveillance de paramètre, et un agencement de câble chauffant (28) incluant trois câbles résistifs chauffants (8) connectés à trois phases (8a, 8b, 8c) d'une alimentation électrique de puissance triphasée s'étendant le long de la conduite, de la borne d'entrée (22) à la borne de sortie (24) en passant par les une ou plusieurs bornes de service (26), chaque dit câble résistif étant monté individuellement au sein d'un guide-câble (9a, 9b, 9c) correspondant, les guides-câbles et les câbles résistifs associés montés dans ceux-ci étant conçus pour être montés sur une surface externe de la conduite et au-dessous de l'isolation thermique (7), et chaque câble résistif comprend un conducteur interne et un blindage encerclant le conducteur interne, **caractérisé en ce que** les blindages de chaque câble résistif sont connectés à une masse et sont interconnectés ensemble au niveau de la borne de sortie et/ou au niveau de borne d'entrée, et **en ce que** les blindages ou les conducteurs internes sont transposés de sorte que les blindages ou les conducteurs internes des trois phases soient transposés au niveau de ladite au moins une borne de service.

2. Système selon la revendication précédente dans lequel les guides-câbles adjacents sont séparés par une distance non nulle (L).

3. Système selon une quelconque revendication précédente dans lequel le système comprend au moins deux bornes de service (26) .

4. Système selon une quelconque revendication précédente dans lequel chaque phase comprend un câble résistif à un fil à tension moyenne doté d'un blindage (5) et d'une isolation (3).

**5.** Système selon une quelconque revendication précédente, dans lequel le guide-câble pour chaque câble résistif possède une section transversale sensiblement carrée, trapézoïdale ou arrondie.

**6.** Système selon la revendication précédente, dans lequel chaque guide-câble est scellé le long de bords longitudinaux sur la surface externe de la conduite (12).

**7.** Système selon une quelconque revendication précédente, dans lequel la distance non nulle (L) entre guides-câbles adjacents est sensiblement constante.

**8.** Système selon une quelconque revendication précédente, dans lequel les guides-câbles et les câbles résistifs associés placés à l'intérieur sont conçus pour être montés sur une partie supérieure de la conduite.

**9.** Système selon une quelconque revendication précédente, dans lequel les guides-câbles sont constitués de polymère ou d'aluminium.

**10.** Système selon une quelconque revendication précédente, dans lequel les câbles résistifs sont connectés en étoile ensemble au niveau de la borne de sortie.

**11.** Système selon une quelconque revendication précédente, dans lequel les fils des câbles résistifs possèdent un profil de section transversale de forme plate.

**12.** Système selon la revendication précédente, dans lequel le système de commande et de surveillance de paramètre comprend des capteurs de température, de courant et de tension de charge.

**13.** Système selon la revendication précédente, dans lequel le système de commande et de surveillance de paramètre est configuré pour la mesure et la commande à distance du système de chauffage, incluant la mesure de la température ambiante, la détection de l'intégrité des câbles résistifs, et la commande du courant et de la tension de charge dans chaque câble résistif.

**Fig. 1**

Fig. 2

Fig. 3

Fig. 4a

Fig. 4b

**Fig. 5**

**Fig. 6**

EP 3 819 530 B1

## REFERENCES CITED IN THE DESCRIPTION

**Patent documents cited in the description**

- RU 2589553 C1
- RU 127273 U1
- CN 108980504 A1

**Non-patent literature cited in the description**

- **M.L. STRUPINSKIY.** Analysis of the self-adjusted cable properties at low temperatures. *Analytical scientific technical journal*
- **M.L. STRUPINSKIY ; N.N. KHRENKOV.** *Industrial electric heating: Hager: 2011,* 2011, 6-11